# EUROPEAN PATENT SPECIFICATION

(11) **EP 0 424 645 B1**
(45) Date of publication and mention of the grant of the patent: **11.05.1994**
(21) Application number: 90116981.3
(22) Date of filing: 04.09.1990
(51) Int. Cl.: C09D 4/02

(54) **Radiation curable transparent coating compositions containing basic colloidal silica**
Strahlungsvernetzbare transparente Überzugsmassen, die basische kolloidale Kieselsäure enthalten
Compositions de revêtement transparent durcissable par irradiation contenant de la silice basique colloidale

(30) Priority: 05.09.1989 US 402362
(43) Date of publication of application: 02.05.1991
(73) Proprietor: DOW CORNING CORPORATION, Midland Michigan 48686-0994 (US)
(72) Inventor: Revis, Anthony, Freeland, Michigan (US)
(74) Representative: Spott, Gottfried, Dr.

(56) References cited:
- US-A- 4 603 086
- PATENT ABSTRACTS OF JAPAN, vol. 12, no. 84 (C-482)[2931], 17th March 1988; & JP-A-62 220 531

## Description

This invention deals with a process by which basic dispersions of colloidal silica may be incorporated into coating compositions which when radiation cured onto solid substrates especially polycarbonate, yield uniform, gel free, abrasion resistant, transparent surfaces on the coated substrates. The present invention offers significant advantages over many of the known silicone coating compositions that use basic dispersions of colloidal silica, in that improved transparent abrasion resistant coatings result from the cure of this invention on solid substrates. Current markets for such coatings are well established and will expand as the abrasion resistance and transparency of these coatings is improved.

It has now been discovered that if basic dispersions of colloidal silica are used in the process as described in copending commonly assigned U.S. application Serial No. 07/379,836, filed July 14, 1989, nontransparent coatings result whether or not all but one of the acids listed in the application, are added. Acrylic acid is listed as a possible acid , however, it is not used in any of the examples. In addition, the recommended level of acid in the examples, is too low and the maximum level set forth in the claims is much too high to meet the critical levels needed to obtain transparent coatings when basic dispersions of colloidal silica are used. The present inventor has found that only certain organic acids used in critical amounts will produce transparent coatings in systems employing basic dispersions of colloidal silica.

The organic acid may be added either to the mixture containing the reaction product of an amino-organofunctional silane and multifunctional acrylate, hereinafter referred to as the mixture containing the Michael adduct or to the dispersion of colloidal silica component, before the two components are combined. It should be noted that similarly with copending commonly assigned U.S. application Serial No. 07/379,836, filed July 14, 1989, the organic acid does not materially alter the film forming medium of the compositions. However, this inventor has found that the addition of organic acid improves the stability of the basic colloidal silica in the film forming medium. Stable here means that no precipitate is formed after addition of the organic acid to either the basic dispersion of colloidal silica or to the mixture containing the Michael adduct. Organic acids used in amounts outside of these ranges result in coating compositions which contain a precipitate and thus are not as transparent.

Never before have either basic dispersions of colloidal silica been treated with organic acid prior to combining the colloidal silica with the remaining components of the composition or have such amounts of specified organic acids been added to mixtures containing a Michael adduct. Consequently, for the first time, the practice of this invention allows basic dispersions of colloidal silica to be incorporated into acryloxy functional silane, glycidoxy-functional silane and amino-organofunctional silane containing coating compositions which when radiation cured onto solid substrates, especially polycarbonate, form truly transparent surfaces on the coated substrates.

Accordingly, it is one object of the present invention to provide an improved process for incorporating basic dispersions of colloidal silica into coating compositions which after being radiation cured and applied to solid substrates yield transparent abrasion resistant coatings.

This and other objects are accomplished hereby by the steps comprising:
(I) reacting
   (A) at least one multifunctional acrylate monomer with,
   (B) the reaction product of
      (i) at least one multifunctional acrylate monomer of (A) and,
      (ii) an amino-organofunctional silane of the formula

         XₐSi{Q(NHQ')_{b}NZH}₄₋ₐ wherein:

         - X: is selected from alkoxy groups having 1-6 carbon atoms;
         - Q and Q': are the same or different divalent hydrocarbon groups;
         - Z: is a hydrogen or a monovalent hydrocarbon group;
         - a: is an integer from 1 to 3;
         - b: is an integer from 0 to 6; and thereafter,
(II) mixing the product of (I) with components comprising
   (C) basic colloidal silica, and
   (D) 7,0 x 10⁻⁴ moles to 4,5 x 10⁻² moles of an organic acid selected from acrylic acid, benzoic acid, butyric acid, cinnamic acid, hexanoic acid, oxalic acid, propiolic acid, propionic acid, trans-2-hexenoic acid, trans-2-pentenoic acid, valeric acid and citric acid per 10 grams of the basic dispersion of colloidal silica.

Component (A) of this novel composition comprises at least one acrylate monomer which contains two or more functional groups selected from the group consisting of acryloxy and methacryloxy groups. These multifunctional acrylate monomers may be used singly or in combination with other multifunctional acrylate monomers. Some preferred multifunctional acrylate monomers useable as component (A) include:
diacrylates of the formulas;
1,6-hexanediol diacrylate,
1,4-butanediol diacrylate,
ethylene glycol diacrylate,
diethylene glycol diacrylate,
tetraethylene glycol diacrylate,
tripropylene glycol diacrylate,
neopentyl glycol diacrylate,
1,4-butanediol dimethacrylate,
poly(butanediol) diacrylate,
tetraethylene glycol dimethacrylate,
1,3-butylene glycol diacrylate,
triethylene glycol diacrylate,
triisopropylene glycol diacrylate,
polyethylene glycol diacrylate,
bisphenol A dimethacrylate,
triacrylates of the formulas;
trimethylolpropane triacrylate,
trimethylolpropane trimethacrylate,
pentaerythritol monohydroxy triacrylate,
trimethylolpropane triethoxy triacrylate,
tetraacrylates of the formula;
pentaerythritol tetraacrylate,
di-trimethylolpropane tetraacrylate,
pentaacrylates of the formula;
dipentaerythritol (monohydroxy) pentaacrylate.
These multifunctional acrylate monomers are commercially available from Aldrich Chemical Company, Inc., Milwaukee, Wisconsin.

The second component (B) of this composition comprises the reaction product of
(i) at least one multifunctional acrylate monomer of (A), and
(ii) an amino-organofunctional silane of the general formula:

   XₐSi{Q(NHQ′)_{b}NZH}₄₋ₐ wherein:

   - X: is selected from alkoxy groups having 1-6 carbon atoms;
   - Q and Q′: are the same or different divalent hydrocarbon groups;
   - Z: is a hydrogen or a monovalent hydrocarbon group;
   - a: is an integer from 1 to 3; and
   - b: is an integer from 0 to 6.

Preferred for this invention are monoamines and diamines, that is amines wherein b is 0 or 1. Specific examples of the most preferred amino-organofunctional silanes are:
N-(2-aminoethyl-3-aminopropyl)trimethoxysilane,
3-aminopropyltriethoxysilane,
3-aminopropyltrimethoxysilane, and
anilinopropyltrimethoxysilane.

These amino-organofunctional silanes are commercially available from Petrarch Systems, Inc., Bristol, PA.

The amino-organofunctional silane modified multi-functional acrylate compounds of this invention can be prepared by mixing an amino-organofunctional silane compound having at least one primary amine or secondary amine group with an acrylate functional compound as described in component (A). When an amine compound and an acrylate compound are mixed, there is a reaction which produces an acrylate functional compound. This reaction is generally known as the Michael addition reaction. For example, in the reaction between (i) and (ii), a primary or secondary amine functionality of the amino-organofunctional silane undergoes a Michael addition to one or more of the acrylate double bonds of the multifunctional acrylate monomers described in component (A). The resulting product is referred to as an amino-organofunctional silane modified multifunctional acrylate monomer. This reaction occurs at a temperature of from room temperature to 100°C. Heating the mixture increases the rate of the reaction, however, as the temperature of the reaction is increased, the loss of acrylate functionality due to free radical initiated chain reactions may also increase. At temperatures above 100°C., considerable loss of the acrylate functionality may occur.

Using a polar solvent also increases the reaction rate of the Michael addition reaction. Alcohols are the preferred solvents because of their low boiling points, non-hazardous properties and alcohols can easily be removed from the compositions, if desired. Suitable alcohols, for example, include any water soluble or water miscible alcohol, for example, methanol, ethanol, propanol, butanol, etc. or ether alcohols, such as ethoxyethanol, butoxyethanol, methoxypropanol, etc.. For purposes of the present process, applicant prefers to use isopropanol. In addition, to ensure sufficient time for the Michael addition to take place, applicant prefers to allow the reactants to remain in contact for between six and seventy two hours at room temperature.

The third component (C) of this composition comprises silica in the form of a colloidal dispersion. Colloidal silica is a dispersion of submicron-sized silica (SiO₂) particles in an aqueous or other solvent medium. The colloidal silicas used in this composition are dispersions of submicron size silica (SiO₂) particles in an aqueous or organic solvent or combination thereof. Colloidal silica is available in acid or basic form. For the purpose of this invention, only basic dispersions of colloidal silica are utilized. An example of satisfactory colloidal silica for use in these coating compositions is Nalco 2327 colloidal silica (Nalco 2327) and Nalco 2326 colloidal silica (Nalco 2326), which can be obtained from Nalco Chemical Company, Naperville, IL. Also, the following experimental colloidal silica sols may be successfully incorporated into these coating compositions: Nalco TX4036 colloidal silica (Nalco TX4036), available from Nalco Chemical Company, Naperville, IL.

Nalco 2327 has a mean particle size of 20nm and an SiO₂content of approximately 40% by weight in water with a pH of approximately 9.3 and ammonium as the stabilizing ion. Nalco 2326 has a mean particle size of 5nm and an SiO₂ content of approximately 14.5% by weight in water with a pH of approximately 9.0 and ammonium as the stabilizing ion. Nalco TX4036 has a mean particle size of 20nm and an SiO₂ content of approximately 25% by weight in water with a pH of approximately 9.8 and ammonium as the stabilizing ion.

The fourth component (D) of this composition comprises a selected organic acid. Such acids, when proper amounts are used, have been found to improve the transparency of the amino-organofunctional coating compositions. For the purposes herein, organic acid of component (D) is limited to those acids listed below containing at least one carboxylic group and an R group having 2 to 8 carbon atoms. These organic acids must also be compatible, within a determined range, with basic dispersions of colloidal silica. In other words, the addition of prescribed amounts of these acids to either the basic dispersion of colloidal silica or to the mixture containing the Michael adduct and, thereafter, adding colloidal silica, must not cause the silica to precipitate. The organic acids for the purposes herein include, acrylic acid, benzoic acid, butyric acid, cinnamic acid, hexanoic acid, oxalic acid, propiolic acid, propionic acid, trans-2-hexenoic acid, trans-2-pentenoic acid, valeric acid and citric acid. The organic acid may be added singly or in combination with other organic acids.

The organic acid may be added either to the dispersion of colloidal silica component or to the Michael adduct mixture before the two are combined. The amount of organic acid used in this invention has been determined to be a critical factor in improving the transparency of the coating compositions. In general, best results are obtained where the organic acid is employed in amounts of from about 0.4 x 10⁻² moles to about 4.5 x 10⁻² moles of organic acid per 10 grams of the basic dispersion of colloidal silica. However, depending on the organic acid used, the range can be extended to include about 7.0 x 10⁻⁴ moles to about 4.5 x 10⁻² moles of organic acid per 10 grams of the basic dispersion of colloidal silica. Organic acids used in amounts within these ranges result in coating compositions which are stable. Stable here means that no precipitate is formed after addition of the organic acid to either the basic dispersion of colloidal silica or to the mixture containing the Michael adduct. Organic acids used in amounts outside of these ranges result in coating compositions which are not as transparent or which contain gel.

It is believed by the inventor herein, that with the addition of colloidal silica, the amino-organofunctional silane modified multifunctional acrylate monomer, undergoes methoxy-hydroxy silane condensation with the colloidal silica. In other words, the methoxy groups on the modified amino-organofunctional silane are replaced by hydroxy groups which are able to hydrogen bond to the hydroxy groups present on the surface of the roughly spherical colloidal silica particles. As a result, it is believed that the silica particles are encapsulated by the amino-organofunctional silane modified multifunctional acrylate monomers and remain suspended because of the attractive forces between the hydroxy groups on the amino-organofunctional silane modified multifunctional acrylate monomers.

Other additives can be added to the compositions in order to enhance the usefulness of the coatings. For example, leveling agents, ultraviolet light absorbers, hindered amine light stabilizers (HALS), dyes and the like, can be included herein. All of these additives and the use thereof are well known in the art and do not require extensive discussions. Therefore, only a limited number will be referred to, it being understood that any of these compounds can be used so long as they do not deleteriously effect the radiation curing of the coating composition and do not adversely effect the transparency of the coating.

A particularly desirable additive has been found to be a small amount of a leveling agent. Leveling agents can be used on the substrates to cover surface irregularities and to aid in the uniform dispersion of the coating composition. These agents are especially useful in compositions where all the solvent has been removed. For purposes of the present invention, the addition of 0.01 to 5.0 percent commercial silicone glycol leveling agents, work well to provide the coating composition with desirable flowout and wetting properties.

Also useful as additives to the present coating compositions are UV absorbers. UV absorbers act to diminish the harmful effects of UV radiation on the final cured composition and thereby enhance the weatherability or resistance to cracking, yellowing and delamination of the coating. Incorporating UV absorbers into the instant compositions will permit the curing process regardless of whether UV or electron beam radiation is used to cure the composition. However, in the situation where UV radiation is to be used to cure the composition, the amount of UV absorbers added must be carefully controlled so as not to hinder the cure. This limitation does not exist in the case of electron beam radiation cure.

For the purpose of the present compositions, the following UV absorbers and combinations thereof in concentrations of less than 20 weight percent based on the total composition, have been shown to produce desirable results:
bis(1,2,2,6,6-pentamethyl-4-piperidinyl)(3,5-bis(1,1-dimethylethyl 1-4-hydroxyphenyl)methyl)butylpropanedioate, 2-ethylhexyl-2-cyano-3,3′-diphenylacrylate, 2-hydroxyl-4-n-octoxybenzophenone, 2-(2′-hydroxy-5′-methylphenyl) benzotriazole and poly(oxy-1,2-ethanediyl), alpha-(3-(3-(2H-benzotriazol-2-yl)-5-(1,1-dimethylethyl)-4-hydroxylphenyl)-1-oxopropyl)-omega-hydroxy. Concentrations of UV absorbers, however, in the range of 1 to 5 percent based on the total weight of the composition are preferred.

In the practice of the present invention, the radiation curable compositions can be made by combining the multifunctional acrylate monomer or mixtures thereof with a given quantity of alcohol. Generally, the manner in which these components are mixed together is not important. The amino-organofunctional silane is added dropwise to the mixture while agitation is applied. The mixture is then stirred at a certain temperature for a sufficient period of time to allow the Michael Addition to take place.

In the case where organic acid is added directly to the mixture containing the Michael adduct, a predetermined amount of organic acid is added dropwise to the mixture containing the Michael adduct. The basic dispersion of colloidal silica is then added to this resulting mixture while agitation is applied. After allowing the mixture to stand for a period of time, the volatiles may optionally be removed by vacuum stripping and/or the mixture may optionally be filtered.

In the case where organic acid is added to the basic dispersion of colloidal silica, a predetermined amount of organic acid is added dropwise to the basic dispersion of colloidal silica. The dispersion of colloidal silica containing an organic acid is then combined with the mixture containing the Michael adduct while agitation is applied. After allowing the mixture to stand for a period of time, the volatiles may optionally be removed by vacuum stripping and/or the mixture may optionally be filtered.

According to the coating process of the present invention, the above described compositions are coated on a substrate using conventional coating techniques modified as appropriate to the particular substrate. For example, these compositions can be applied to a variety of solid substrates by methods such as roller coating, flow coating, dip coating, spin coating, spray coating and curtain coating. These various methods of coating allow the compositions to be placed on the substrate at variable thicknesses, thus, allowing a wider range of use of the compositions. Coating thicknesses may vary, but for improved abrasion resistance coating thicknesses of 2-25 microns, preferably about 5 microns, are recommended.

The compositions are then cured by either ultraviolet or electron beam radiation. The compositions may be ultraviolet light cured if one or more photoinitiators is added prior to curing. Materials used in conjunction with photoinitiators that increase their efficiency by minimizing oxygen quenching of the intermediate free radicals in the polymerization process, known as accelerators, may also be added. Examples of well known accelerators include, methyldiethanolamine and triethanolamine, available from Aldrich Chemical Company, Milwaukee, Wisconsin.

There are no special restrictions on the photoinitiators as long as they can generate radicals by the absorption of optical energy. Ultraviolet light sensitive photoinitiators or blends of initiators used in the UV cure of the present composition include 2-hydroxy-2-methyl-1-phenylpropan-1-one (Darocur 1173), sold by EM Chemicals, Hawthorne, New York and 2,2-dimethoxy-2-phenyl-acetyl-phenone (Urgacure 651), sold by Ciba-Geigy Corporation, Hawthorne, New York. For purposes of this invention, it has been found that from 0.05 to 5 weight percent based on the total solids in the composition, of the photoinitiators described herein will cause the composition to cure. Desirable hard, transparent coatings having excellent adhesion can thus be obtained when the composition of this invention is applied to a substrate and exposed to radiation such as that provided by UV lamps.

When the aforementioned photoinitiators and accelerators are used, these additives are individually mixed with either the aforementioned mixtures before the solvents have been removed or to the residue remaining after the removal of solvents.

Alternatively, the coating composition may be electron beam radiation cured. Low energy electron beam radiation has the advantage over UV cure of decreasing the curing time while increasing the cross link density of the coated sample. Because electron beam radiation has a shorter wavelength than UV radiation, EB radiation penetrates deeper into a coating sample causing more of the functional groups to react thus resulting in a greater degree of cross linking in the sample. In addition, nonfunctional groups may also react in the presence of EB radiation therefore further increasing the cross link density of the coating sample. EB cure also allows for an increase in weatherability of the coating because a greater concentration of UV absorbers may be added to EB cured compositions than to compositions which are UV cured since the need for photoinitiators is eliminated. UV absorbers function to protect the substrate and the coating from the deleterious effects of ultra-violet light thus resulting in the greater weatherability of EB radiation cured coated substrates.

Electron beam sources of various types such as van de Graaff-type, resonance transformer-type, linear-type, dynatron-type and high frequency-type can be used as a source of electron beam. Electron beam having energy of from 50 to 1000 KeV, preferably from 100 to 300 KeV discharged therefrom may be irradiated in a dose of from 0.1 to 10 Mega Rads (MR). Particularly preferred source of electron beam is one wherein continuous curtain-like beam is irradiated from linear filaments. Examples of commercially available sources of electron beam are Electro Curtain CB-150 available from Energy Sciences Inc. and NP-ESH 150 available from Otto Durr.

The curable composition obtained in the process of the present invention is coated on the surface of a substrate (e.g., polycarbonate, etc.). After said composition has been ultraviolet light or electron beam treated, a cured coating film is formed.

By choice of the proper formulation and application conditions including the optional use of a leveling agent, the compositions can be applied and will adhere to substantially all solid substrates. Substrates which are especially contemplated herein are transparent and nontransparent plastics and metals. More particularly, these plastics are synthetic organic polymeric substrates such as acrylic polymers like poly(methylmethacrylate); polyesters, such as poly(ethylene terephthalate), poly (butylene terephthalate), etc.; polyamides; polyimides; acrylonitrile-styrene copolymers; styrene-acrylonitrile-butadiene copolymers; polyvinyl chloride; butyrates; polyethylene; polyolefins and the like including modifications thereof. The compositions of this invention are especially useful as transparent coatings for polycarbonates such as poly(bisphenol-A carbonate) and those polycarbonates known as Lexan (R), sold by General Electric Company, Schenectady, NY; and as coatings for acrylics such as polymethylmethacrylates. Metal substrates on which the present compositions are also effective include bright and dull metals like aluminum and bright metallized surfaces like sputtered chromium alloy. Other solid substrates contemplated herein include wood, painted surfaces, leather, glass, ceramics, textiles and paper.

The apparatus and testing procedures used for the results shown herein are as follows:
Adhesion was measured by cross-hatch adhesion. A series of cross-hatch scribes are made in an area of 6,4 cm² (one square inch) with lines to form 2,5 mm (1/10 inch) squares. This surface is covered with 25,4 mm (1.0 inch) No. 600 Scotch Brand adhesive tape which is pressed down firmly over the cross-hatched area. The tape is withdrawn from the surface of the substrate with one rapid motion at about a 90° angle. This action of applying and removing the tape is carried out three tiles and then the substrate is observed. The number of squares remaining intact on the substrate are reported as a percentage of the total number of squares on the grid.

A steel wool test was conducted. In this test, a 13 cm² (two inch square) of 0000 steel wool was applied over the face of a 680g (24 oz.) hammer and was secured with a rubber band. Coated sample blanks were tested for scratch resistance to 20 double rubs across the center of the sample with the weighted steel wool. The hammer is held by the end of its handle such that the majority of the pressure on the steel wool comes from the hammer head. The sample is graded according to the amount of scratching produced by the steel wool and hammer. The absence of scratches on the sample is graded a 1; slight scratching is graded a 2 and heavy scratching is graded a 3.

A pencil test was conducted. This test is meant to be a qualitative method of determining scratch resistance of a coating. A coated panel is placed on a firm horizontal surface. A pencil is held firmly against the film at a 45° angle (point away from the operator) and pushed away from the operator in a (1/4-in.) 6.5-mm stroke. The process is started with the hardest lead pencil and continued down the scale of hardness to the pencil that will not cut into or gouge the film. The hardest pencil that will not cut through the film to the substrate for a distance of at least (1/8 in.) 3mm is reported according to the following scale from Berol Corporation, Brentwood, TN.: 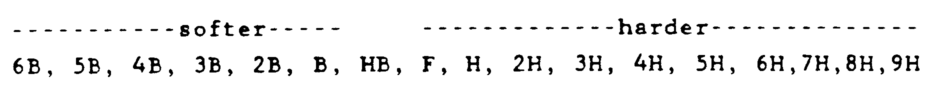
The HB grade is approximately equal to that of a #2 pencil. The F grade is slightly harder and is the one most commonly used. The H grades are harder than that and get progressively harder up through the 9H grade which is very hard. The B grade is softer than the HB grade and get progressively softer through the 6B grade which is very soft.

The percent light transmittance of the samples was determined using a Cary 210 Spectrophotometer with a wavelength range 380-700nm. Lexan (R) polycarbonate from General Electric Company, Schenectady, NY, was used as a reference sample and substrate. The percent light transmittance of the uncoated polycarbonate was determined to be 86.9%. The coating samples were applied to the polycarbonate and the percent light transmittance was determined as a percentage of the transmittance of the uncoated polycarbonate sample.

In order that those skilled in the art may better understand how to practice the present invention, the following examples are given by way of illustration and not by way of limitation.

### Example 1

A mixture of 19.44 g of aminopropyltrimethoxysilane, 454.14 g of isopropanol, 24.48 g of hexanedioldiacrylate and 68.22 g of trimethylolpropanetriacrylate was allowed to stand at room temperature for 72 hours. This mixture is referred to as the mixture containing the Michael adduct. Separately, 1.00 g of acrylic acid was added dropwise, by means of a pipet, to 10.0 g of Nalco 2327. This mixture was added to 27.0 g of the mixture containing the Michael adduct. The resulting mixture was flow coated onto a 4 x 4 polycarbonate panel and electron beam cured under 4MR, 160KeV electron dose at a belt speed of 20,7 m (68 feet) per minute under a 15 cm (six inch) wide electron beam operated with a 4 milliamp electron current in a nitrogen atmosphere containing 200 ppm oxygen.

The compositional ratios and test results are summarized in Table I.

### Example 2

Acrylic acid, 1.0 g was added dropwise to 10.0 g of Nalco 2327. This mixture was then added, by means of a pipet, to 27.0 g of the mixture containing the Michael adduct. To 10.0 g of the resulting mixture was added 0.11 g of DAROCUR 1173, sold by EM Chemicals, Hawthorne, NY. and 0.02 g of methyldiethanolamine, sold by Aldrich Chemical Company, Milwaukee, WI. This mixture was flow coated onto a 4 x 4 polycarbonate panel, which was allowed to air dry for 5 minutes. The coated polycarbonate sample was then UV cured by passing the sample through a medium pressure mercury vapor arc lamp with an average intensity of 91.56 mW/cm² at a line speed of 0,9 m (three feet) per minute.

The compositional ratios and test results are summarized in Table I.

### Example 3

Acrylic acid, 3.25 g was added dropwise to 10.0 g of Nalco 2327. This mixture was then added, by means of a pipet, to 25.0 g of the mixture containing the Michael adduct. The resulting mixture was flow coated onto a 4 x 4 polycarbonate panel and electron beam cured under 4MR, 160KeV electron dose at a belt speed of 20,7 m (68 feet) per minute under a 15 cm (six inch) wide electron beam operated with a 4 milliamp electron current in a nitrogen atmosphere containing 200 ppm oxygen.

The compositional ratios and test results are summarized in Table I.

### Example 4

A solution containing 2.0 g of 33.0% benzoic acid in isopropanol was added dropwise to 10.0 g of Nalco 2327. This mixture was then added, by means of a pipet, to the mixture containing the Michael adduct. The resulting mixture was flow coated onto a 4 x 4 polycarbonate panel and electron beam cured under 4MR, 160KeV electron dose at a belt speed of 15 cm (68 feet) per minute under a 20,7 m (six inch) wide electron beam operated with a 4 milliamp electron current in a nitrogen atmosphere containing 200 ppm oxygen.

The compositional ratios and test results are summarized in Table I.

### Example 5

Trans-2-pentenoic acid, 0.25 g was added dropwise to 5.0 g of Nalco 2327. This mixture was then added, by means of a pipet, to 14.0 g of the mixture containing the Michael adduct. The resulting mixture was flow coated onto a 4 x 4 polycarbonate panel and electron beam cured under 4MR, 160KeV electron dose at a belt speed of 20,7 m (68 feet) per minute under a 15 cm (six inch) wide electron beam operated with a 4 milliamp electron current in a nitrogen atmosphere containing 200 ppm oxygen.

The compositional ratios and test results are summarized in Table I.

### Example 6

A solution containing 2.0 g of 10.0% trans-2-hexenoic acid in isopropanol was added dropwise to 5.0 g of Nalco 2327. This mixture was then added, by means of a pipet, to 14.0 g of the mixture containing the Michael adduct. The resulting mixture was flow coated onto a 4 x 4 polycarbonate panel and electron beam cured under 4MR, 160KeV electron dose at a belt speed of 20,7 m (68 feet) per minute under a 15 cm (six inch) wide electron beam operated with a 4 milliamp electron current in a nitrogen atmosphere containing 200 ppm oxygen.

The compositional ratios and test results are summarized in Table I.

### Example 7

A solution containing 5.0 g of 3.75% cinnamic acid in isopropanol was added dropwise to 5.0 g of Nalco 2327. This mixture was then added, by means of a pipet, to 14.0 g of the mixture containing the Michael adduct. The resulting mixture was flow coated onto a 4 x 4 polycarbonate panel and electron beam cured under 4MR, 160KeV electron dose at a belt speed of 20,7 m (68 feet) per minute under a 15 cm (six inch) wide electron beam operated with a 4 milliamp electron current in a nitrogen atmosphere containing 200 ppm oxygen.

The compositional ratios and test results are summarized in Table I.

### Example 8

Propiolic acid, 0.10 g was added dropwise to 5.0 g of Nalco 2327. This mixture was then added, by means of a pipet, to 14.0 g of the mixture containing the Michael adduct. The resulting mixture was flow coated onto a 4 x 4 polycarbonate panel and electron beam cured under 4MR, 160KeV electron dose at a belt speed of 20,7 m (68 feet) per minute under a 15 cm (six inch) wide electron beam operated with a 4 milliamp electron current in a nitrogen atmosphere containing 200 ppm oxygen.

The compositional ratios and test results are summarized in Table I.

### Example 9

A solution containing 7.0 g of 10.0% citric acid in isopropanol was added dropwise to 5.0 g of Nalco 2327. This mixture was then added, by means of a pipet, to 14.0 g of the mixture containing the Michael adduct. The resulting mixture was flow coated onto a 4 x 4 polycarbonate panel and electron beam cured under 4MR, 160KeV electron dose at a belt speed of 20,7 m (68 feet) per minute under a 15 cm (a six inch) wide electron beam operated with a 4 milliamp electron current in a nitrogen atmosphere containing 200 ppm oxygen.

The compositional ratios and test results are summarized in Table I.

### Example 10

Hexanoic acid, 0.55 g was added dropwise to 5.0 g of Nalco 2327. This mixture was then added, by means of a pipet, to 14.0 g of the mixture containing the Michael adduct. The resulting mixture was flow coated onto a 4 x 4 polycarbonate panel and electron beam cured under 4MR, 160KeV electron dose at a belt speed of 20,7 m (68 feet) per minute under a 15 cm (six inch) wide electron beam operated with a 4 milliamp electron current in a nitrogen atmosphere containing 200 ppm oxygen.

The compositional ratios and test results are summarized in Table I.

### Example 11

Propionic acid, 1.65 g was added dropwise to 5.0 g of Nalco 2327. This mixture was then added, by means of a pipet, to 14.0 g of the mixture containing the Michael adduct. The resulting mixture was flow coated onto a 4 x 4 polycarbonate panel and electron beam cured under 4MR, 160KeV electron dose at a belt speed of 20,7 m (68 feet) per minute under a 15 cm (six inch) wide electron beam operated with a 4 milliamp electron current in a nitrogen atmosphere containing 200 ppm oxygen.

The compositional ratios and test results are summarized in Table I.

### Example 12

Valeric acid, 0.35 g was added dropwise to 5.0 g of Nalco 2327. This mixture was then added, by means of a pipet, to 14.0 g of the mixture containing the Michael adduct. The resulting mixture was flow coated onto a 4 x 4 polycarbonate panel and electron beam cured under 4MR, 160KeV electron dose at a belt speed of 20,7 m (68 feet) per minute under a 15 cm (six inch) wide electron beam operated with a 4 milliamp electron current in a nitrogen atmosphere containing 200 ppm oxygen.

The compositional ratios and test results are summarized in Table I.

### Example 13

A solution containing 1.0 g of 25.0% oxalic acid in isopropanol was added dropwise to 5.0 g of Nalco 2327. This mixture was then added, by means of a pipet, to 14.0 g of the mixture containing the Michael adduct. The resulting mixture was flow coated onto a 4 x 4 polycarbonate panel and electron beam cured under 4MR, 160KeV electron dose at a belt speed of 20,7 m (68 feet) per minute under a 15 cm (six inch) wide electron beam operated with a 4 milliamp electron current in a nitrogen atmosphere containing 200 ppm oxygen.

The compositional ratios and test results are summarized in Table I.

### Example 14

Acrylic acid, 1.0 g was added dropwise to 27.0 g of the mixture containing the Michael adduct. This mixture was then added to 10.0 g of Nalco 2327. The resulting mixture was flow coated onto a 4 x 4 polycarbonate panel and electron beam cured under 4MR, 160KeV electron dose at a belt speed of 20,7 m (68 feet) per minute under a 15 cm (six inch) wide electron beam operated with a 4 milliamp electron current in a nitrogen atmosphere containing 200 ppm oxygen.

The compositional ratios and test results are summarized in Table I.

### COMPARISON EXAMPLE A

Acetic acid, 2.55 g was added dropwise to 10.0 g of Nalco 2327. This mixture was then added, by means of a pipet, to 27.0 g of the mixture containing the Michael adduct. The resulting mixture appeared white in color and contained gel particles. This mixture was flow coated onto a 4 x 4 polycarbonate panel and electron beam cured under 4MR, 160KeV electron dose at a belt speed of 20,7 m (68 feet) per minute under a 15 cm (six inch) wide electron beam operated with a 4 milliamp electron current in a nitrogen atmosphere containing 200 ppm oxygen. The coating cracked and eventually separated from the polycarbonate.

The compositional ratios and test results are summarized in Table I.

### COMPARISON EXAMPLE B

Acetic acid, 0.24 g was added dropwise to 10.0 g of Nalco 2327. This mixture was then added, by means of a pipet, to 27.0 g of the mixture containing the Michael adduct. The resulting mixture appeared white in color and contained gel particles. This mixture was flow coated onto a 4 x 4 polycarbonate panel and electron beam cured under 4MR, 160KeV electron dose at a belt speed of 20,7 m (68 feet) per minute under a 15 cm (six inch) wide electron beam operated with a 4 milliamp electron current in a nitrogen atmosphere containing 200 ppm oxygen.

The compositional ratios and test results are summarized in Table I.

### COMPARISON EXAMPLE C

To 10.0 g of Nalco 2327 was added 27.0 g of the mixture containing the Michael adduct. The resulting mixture appeared grayish/white in color and contained gel particles. This mixture was flow coated onto a 4 x 4 polycarbonate panel and electron beam cured under 4MR, 160KeV electron dose at a belt speed of 20,7 m (68 feet) per minute under a 15 cm (six inch) wide electron beam operated with a 4 milliamp electron current in a nitrogen atmosphere containing 200 ppm oxygen.

The compositional ratios and test results are summarized in Table I.

**TABLE I**

| COMPOSITION | SiO₂ % | ADHESION TEST | STEEL WOOL | PENCIL TEST | % LIGHT TRANSMITTANCE |
|---|---|---|---|---|---|
| Example 1 | 38.6 | 100% | 1 | F | 99.5% |
| Example 2 | 38.6 | 100% | 1 | F | 99.5% |
| Example 3 | 31.7 | 100% | 1 | F | 99.5% |
| Example 4 | 39.9 | 100% | 1 | H | 100% |
| Example 5 | 39.8 | 100% | 1 | H | 100% |
| Example 6 | 40.2 | 100% | 1 | H | 100% |
| Example 7 | 40.3 | 100% | 1 | F | 100% |
| Example 8 | 41.1 | 100% | 1 | F | 98.5% |
| Example 9 | 36.6 | 100% | 1 | F | 96.0% |
| Example 10 | 37.6 | 100% | 1 | F | 100% |
| Example 11 | 31.2 | 100% | 1 | F | 98.0% |
| Example 12 | 39.1 | 100% | 1 | F | 99.0% |
| Example 13 | 39.8 | 100% | 1 | F | 98.5% |
| Example 14 | 38.6 | 100% | 1 | F | 99.5% |
| Example A | 33.6 | ---- | -- | -- | ----- |
| Example B | 41.7 | 90% | 2 | HB | <1.0% |
| Example C | 42.8 | 50% | 2 | HB | 40.5% |

As the results of Table I clearly indicate, basic dispersions of colloidal silica treated with prescribed levels of an organic acid, as defined in the specifications, prior to combining with the mixture containing the Michael adduct, form transparent coatings after being radiation cured onto polycarbonate. In addition, similar results are obtained where the organic acid is added to the mixture containing the Michael adduct prior to combining with basic dispersions of colloidal silica, as Example 14 highlights.

## Claims

1. A process for incorporating basic colloidal silica into a transparent abrasion resistant coating comprising
(I) reacting
(A) at least one multifunctional acrylate monomer with,
(B) the reaction product of
(i) at least one multifunctional acrylate monomer of (A) and,
(ii) an amino-organofunctional silane of the formula
XₐSi{Q(NHQ')_{b}NZH}₄₋ₐ wherein:
X is selected from alkoxy groups having 1-6 carbon atoms;
Q and Q' are the same or different divalent hydrocarbon groups;
Z is a hydrogen or a monovalent hydrocarbon group;
a is an integer from 1 to 3;
b is an integer from 0 to 6; and thereafter,
(II) mixing the product of (I) with components comprising
(C) a basic dispersion of colloidal silica, and
(D) 7,0 x 10⁻⁴ moles to 4,5 x 10⁻² moles of an organic acid selected from acrylic acid, benzoic acid, butylic acid, cinnamic acid, hexanoic acid, oxalic acid, propiolic acid, propionic acid, trans-2-hexenoic acid, trans-2-pentenoic acid, valeric acid and citric acid per 10 grams of the basic dispersion of colloidal silica.

2. A process as claimed in claim 1 in which in the composition there is also present one or more photoinitiators.

3. A process as claimed in claim 2 in which the composition additionally contains one or more accelerators.

4. The product obtained by the cure of the composition used according to the process of claim 1.

## Patentansprüche

1. Verfahren zur Einarbeitung von basischem kolloidalem Siliciumdioxid in eine transparente abriebbeständige Beschichtung umfassend, dass man (I)
(A) mindestens ein multifunktionelles Acrylatmonomer mit
(B) dem Reaktionsprodukt von
(i) mindestens einem multifunktionellen Acrylatmonomer von (A) und
(ii) einem aminoorganofunktionellen Silan der Formel
XₐSi{Q(NHQ')_{b}NZH}_{4-a,} worin
X ausgewählt ist aus Alkoxygruppen mit 1 - 6 Kohlenstoffatomen;
Q und Q' gleiche oder verschiedene divalente Kohlenwas serstoffgruppen sind;
Z Wasserstoff oder eine monovalente Kohlenwasserstoffgruppe ist;
a eine ganze Zahl von 1 bis 3 ist;
b eine ganze Zahl von 0 bis 6 ist,
umsetzt und danach (II) das Produkt von (I) mit den Komponenten vermischt, die umfassen
(C) eine basische Dispersion aus kolloidalem Siliciumdioxid und
(D) 7,0 x 10⁻⁴ Mol bis 4,5 x 10⁻² Mol einer organischen Säure ausgewählt aus Acrylsäure, Benzoesäure, Buttersäure, Zimtsäure, Hexansäure, Oxalsäure, Propiolsäure, Propionsäure, Trans-2-hexansäure, Trans-2-pentensäure, Valeriansäure und Zitronensäure, pro 10 g der basischen Dispersion des kolloidalen Siliciumdioxids.

2. Verfahren nach Anspruch 1, worin in der Zusammensetzung auch ein oder mehrere Photoinitiatoren vorhanden sind.

3. Verfahren nach Anspruch 2, worin die Zusammensetzung zusätzlich einen oder mehrere Beschleuniger enthält.

4. Produkt erhalten durch die Härtung der bei dem Verfahren von Anspruch 1 verwendeten Zusammensetzung.

## Revendications

1. Procédé pour incorporer de la silice colloïdale basique dans un revêtement transparent résistant à l'abrasion, comprenant
(I) la réaction
(A) d'au moins un monomère acrylate multifonctionnel avec,
(B) le produit réactionnel de
(i) au moins un monomère acrylate multifonctionnel de (A) et
(ii) un silane amino-organofonctionnel de la formule
XₐSi[Q(NHQ')_{b}NZH]₄₋ₐ,
dans lequel :
X est choisi parmi les groupes alcoxy ayant 1 à 6 atome(s) de carbone ;
Q et Q' sont des groupes hydrocarbonés divalents identiques ou différents;
Z est un hydrogène ou un groupe hydrocarboné monovalent ;
a est un nombre entier de 1 à 3 ;
b est un nombre entier de 0 à 6 ;
et ensuite,
(II) le mélange du produit de (I) avec des composants comprenant
(C) une dispersion basique de silice colloïdale, et
(D) 7,0x10⁻⁴ mole à 4,5x10⁻² mole d'un acide organique choisi parmi l'acide acrylique, l'acide benzoïque, l'acide butylique, l'acide cinnamique, l'acide hexanoïque, l'acide oxalique, l'acide propiolique, l'acide propionique, l'acide trans-2-hexènoïque, l'acide trans-2-pentènoïque, l'acide valérique et l'acide citrique pour 10 grammes de la dispersion basique de silice colloïdale.

2. Procédé selon la revendication 1, dans lequel, dans la composition, un ou plusieurs photo-initiateur(s) est (sont) aussi présent(s).

3. Procédé selon la revendication 2, dans lequel la composition comprend en plus un ou plusieurs accélérateur(s).

4. Produit obtenu par le durcissement de la composition utilisée selon le procédé de la revendication 1.
